(19) Europäisches Patentamt
European Patent Office
Office européen des brevets

(11) **EP 3 322 012 A1**

(12) **EUROPEAN PATENT APPLICATION**
published in accordance with Art. 153(4) EPC

(43) Date of publication:
**16.05.2018 Bulletin 2018/20**

(51) Int Cl.:
***H01M 8/02*** *(2016.01)*    ***H01M 4/96*** *(2006.01)*
***H01M 8/10*** *(2016.01)*

(21) Application number: **16821376.7**

(22) Date of filing: **04.07.2016**

(86) International application number:
**PCT/JP2016/069776**

(87) International publication number:
**WO 2017/006907 (12.01.2017 Gazette 2017/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.07.2015 JP 2015137476**

(71) Applicant: **Toray Industries, Inc.**
**Tokyo 103-8666 (JP)**

(72) Inventors:
• **HORINOUCHI, Ayanobu**
**Otsu-shi**
**Shiga 520-8558 (JP)**
• **KAJIWARA, Kentaro**
**Otsu-shi**
**Shiga 520-8558 (JP)**
• **SHIMOYAMA, Satoru**
**Otsu-shi**
**Shiga 520-8558 (JP)**
• **HORIGUCHI, Tomoyuki**
**Otsu-shi**
**Shiga 520-8558 (JP)**

(74) Representative: **Webster, Jeremy Mark et al**
**Mewburn Ellis LLP**
**City Tower**
**40 Basinghall Street**
**London EC2V 5DE (GB)**

(54) **SOLID-POLYMER FUEL CELL**

(57)    An object of the present invention is to provide a polymer electrolyte fuel cell including a grooved gas diffusion electrode, which has good water discharge performance and can exhibit high power generation performance even under particularly humid power generation conditions and in a case where a parallel separator is used. The present invention provides a polymer electrolyte fuel cell including a gas diffusion electrode a substrate of which is a carbon fiber nonwoven fabric, and a separator having parallel linear channels formed thereon, wherein the carbon fiber nonwoven fabric has corrugated plate-like irregularities in which linear ridges and linear grooves are alternately repeated, and the ridges and the grooves have light permeability at an equal level, and the gas diffusion electrode and the separator are arranged so that a surface of the carbon fiber nonwoven fabric having the irregularities thereon faces a surface of the separator having the channels thereon, and extending directions of the ridges and the grooves coincide with an extending direction of the channels in the separator.

Figure 1

**Description**

TECHNICAL FIELD

The present invention relates to a polymer electrolyte fuel cell including a carbon fiber nonwoven fabric as a gas diffusion electrode.

BACKGROUND ART

Among fuel cell systems that generate electric power by reaction of a fuel with an oxidizer, a polymer electrolyte fuel cell can generate electric power at a relatively low temperature of about 100°C and has high power density. For this reason, the polymer electrolyte fuel cell is used in power sources of automobiles that run on an electric motor, cogeneration systems for home use, and the like.

In a polymer electrolyte fuel cell, usually, a fuel gas containing hydrogen and an oxidizer gas containing oxygen are separated by an electrolyte membrane. The side to which the fuel gas is supplied is referred to as the anode side, and the side to which the oxidizer gas is supplied is referred to as the cathode side. The fuel gas supplied to the channels in the anode-side separator is diffused into the gas diffusion electrode in contact with the separator, and is separated into electrons and protons in the anode catalyst layer disposed on the other surface of the gas diffusion electrode (surface reverse to the side in contact with the separator) . Electrons are connected to a load (device) outside the fuel cell through carbon particles in the catalyst layer and carbon fibers that constitute the gas diffusion electrode, and thus a DC current can be drawn from the cell. These electrons travel to the cathode catalyst layer through the cathode gas diffusion electrode, and the protons generated in the anode catalyst layer travel to the cathode catalyst layer through the electrolyte membrane. Furthermore, to the channels in the cathode-side separator, the oxidizer gas containing oxygen is supplied. The oxidizer gas is diffused into the gas diffusion electrode substrate in contact with the separator, and produces water together with the protons and electrons at the cathode catalyst layer disposed on the other surface of the gas diffusion electrode. The generated water travels from the catalyst layer to the grooves in the cathode-side separator through the gas diffusion electrode substrate, passes through the channels in the separator, and is discharged to the outside of the fuel cell.

If the water generated by the reaction blocks pores in the catalyst layer and the gas diffusion electrode, and hinders the transport of hydrogen or air, high power generation efficiency cannot be achieved. This phenomenon is generally called "flooding". In order to prevent flooding, it is necessary to positively discharge the water generated by the reaction. In particular, it is important to promptly discharge the water that has reached the channels in the separator to the outside of the system.

A technique that has been proposed for promoting the discharge of water in the channels of the separator is a technique of providing irregularities such as grooves to the gas diffusion electrode arranged to face the channels of the separator. For example, Patent Documents 1 to 4 propose a technique of forming grooves or through pores in the gas diffusion electrode for improving water permeability.

PRIOR ART DOCUMENTS

PATENT DOCUMENTS

Patent Document 1: Japanese Patent Laid-open Publication (Translation of PCT Application) No. 11-511289
Patent Document 2: Japanese Patent Laid-open Publication No. 2013-20843
Patent Document 3: Japanese Patent Laid-open Publication No. 2003-17076
Patent Document 4: Japanese Patent Laid-open Publication No. 2006-139921

SUMMARY OF THE INVENTION

PROBLEMS TO BE SOLVED BY THE INVENTION

There are two types of separators, one having a serial channel for supplying a fuel gas through one continuous channel without having any branch, and one having parallel channels having a branch channel for distributing a fuel gas that is branched from the central channel. In a separator having a serial channel, the flow speed of the gas passing through the channel is higher than in a separator having parallel channels. Therefore, it is easy to discharge the water accumulated in the channel to the outside of the system by the fuel gas, and the flooding phenomenon hardly occurs.

On the other hand, in the serial channel, high pressure is required to flow a gas in the channel, resulting in high system cost. For this reason, a fuel cell system capable of adequately generating electric power even with a separator having parallel channels is currently demanded.

According to the investigation made by the present inventors, however, the following matter was found: in the case of a separator having parallel channels, under high humidity conditions, the flooding phenomenon cannot be sufficiently suppressed and the cell is incapable of stable power generation only by the techniques described in Patent Documents 1 to 4. An object of the present invention is to provide a polymer electrolyte fuel cell which has good water discharge performance and can maintain high power generation performance even with a separator having parallel channels and even under humid power generation conditions.

SOLUTIONS TO THE PROBLEMS

The present invention for achieving the above-mentioned object provides a polymer electrolyte fuel cell including a gas diffusion electrode a substrate of which is a carbon fiber nonwoven fabric, and a separator having parallel linear channels formed thereon, wherein the carbon fiber nonwoven fabric has corrugated plate-like irregularities in which linear ridges and linear grooves are alternately repeated, and the ridges and the grooves have light permeability at an equal level, and the gas diffusion electrode and the separator are arranged so that a surface of the carbon fiber nonwoven fabric having the irregularities thereon faces a surface of the separator having the channels thereon, and extending directions of the ridges and the grooves coincide with an extending direction of the channels in the separator.

EFFECTS OF THE INVENTION

The polymer electrolyte fuel cell of the present invention is excellent in water discharge performance even under high humidity conditions although the cell includes a separator having parallel channels, so that the cell is capable of stable power generation while suppressing flooding.

BRIEF DESCRIPTION OF THE DRAWINGS

Fig. 1 is a schematic cross-sectional view of a cell configuration of a polymer electrolyte fuel cell of the present invention.
Fig. 2 is a schematic cross-sectional view of a carbon fiber nonwoven fabric having rectangular wave-shaped irregularities.
Fig. 3 is an upright observation image of the carbon fiber nonwoven fabric produced in Example 1.
Fig. 4 is an inverted observation image of the carbon fiber nonwoven fabric produced in Example 1.
Fig. 5 is an upright observation image of the carbon fiber nonwoven fabric produced in Comparative Example 1.
Fig. 6 is an inverted observation image of the carbon fiber nonwoven fabric produced in Comparative Example 1.
Fig. 7 is a schematic view showing a channel shape of a separator having parallel channels.
Fig. 8 is a schematic view showing a channel shape of a separator having multi-parallel channels.
Fig. 9 is a schematic view showing a channel shape of a separator having interdigitated channels.

EMBODIMENTS OF THE INVENTION

[Carbon fiber nonwoven fabric]

The carbon fiber nonwoven fabric is obtained by heating a carbon fiber precursor nonwoven fabric in an inert gas atmosphere for carbonization. The carbon fibers are obtained by heating carbon fiber precursors in an inert gas atmosphere for carbonization. A nonwoven fabric is obtained by fixing fibers making up a web by a method such as mechanical entangling, thermal bonding, or bonding with a binder. Further, the web is a sheet formed by laminating carbon fiber precursors. The carbon fiber precursors will be described later. The web may be a dry-laid web such as a parallel-laid web or a cross-laid web, an air-laid web, a web made by wet forming, or a spunbonded web, a melt-blown web, or an electrospun web which is obtained by extrusion. Examples of the carbon fiber nonwoven fabric obtained by forming such webs into a sheet include those obtained by mechanically entangling webs, thermal bonding, or bonding with a binder.

The smaller the fiber diameter of the carbon fibers is, the easier it is to achieve a high apparent density of the carbon fiber nonwoven fabric and to obtain a carbon fiber nonwoven fabric excellent in electric conductivity and thermal conductivity. Meanwhile, the average pore size of the carbon fiber nonwoven fabric tends to be smaller, so that the carbon fiber nonwoven fabric is deteriorated in water discharge performance and gas diffusibility. The fiber diameter of the carbon fibers should be appropriately determined according to the use of the carbon fiber nonwoven fabric. The fiber diameter of the carbon fibers is preferably 3 to 30 $\mu$m, more preferably 5 to 20 $\mu$m when the carbon fiber nonwoven fabric is used as a general gas diffusion electrode.

The average pore size of the carbon fiber nonwoven fabric is preferably 40 $\mu$m or more, more preferably 45 $\mu$m or more, even more preferably 50 $\mu$m or more. The upper limit of the average pore size is not particularly limited. The average pore size is preferably 100 $\mu$m or less, more preferably 80 $\mu$m or less. An average pore size of 40 $\mu$m or more provides high performance in gas diffusion and water discharge. An average pore size of 100 $\mu$m or less makes prevention of drying out easy. As used herein, the "average pore size of the carbon fiber nonwoven fabric" means a value measured by a mercury intrusion method. The average pore size of the carbon fiber nonwoven fabric is a value calculated with the surface tension $\sigma$ of mercury being 480 dyn/cm and the contact angle between mercury and the carbon fiber nonwoven fabric being 140°. The average pore size can be measured by the mercury intrusion method using, for example, PoreMaster (registered trademark) (manufactured by Quantachrome Instruments Japan G.K.).

When a carbide as a binder adheres to the contact points of carbon fibers that constitute the carbon fiber nonwoven fabric, the contact area of the carbon fibers at the contact points increases, so that excellent electric conductivity and thermal conductivity can be obtained. Examples of methods for imparting the binder include a method of impregnating a carbon fiber nonwoven fabric obtained after the carbonization with a thermosetting resin or spraying a thermosetting resin to a carbon fiber nonwoven fabric obtained after the carbonization, and then heating the fabric again in an inert atmosphere. In this case, examples of the usable thermosetting resin include a phenol resin, an epoxy resin, a melamine resin, and a furan resin. Among them, a phenol resin is particularly preferably used. Furthermore, as described later, a method of mixing a thermoplastic resin in the carbon fiber precursor nonwoven fabric in advance is also preferable.

The carbon fiber nonwoven fabric has, on a surface thereof, corrugated plate-like irregularities in which linear ridges and linear grooves are alternately repeated (hereinafter sometimes simply referred to as "corrugated plate-like irregularities" or "irregularities"). As used herein, the term "corrugated plate-like irregularities" encompasses irregularities having a cross-sectional shape of sinusoidal wave, rectangular wave, triangular wave, or sawtooth wave.

The form of the corrugated plate-like irregularities will be described below. The description of the corrugated plate-like irregularities in the present specification, unless otherwise noted, refers to the shape of the corrugated plate-like irregularities on the assumption that the surface of the carbon fiber nonwoven fabric having the irregularities is trimmed until the carbon fiber nonwoven fabric has a thickness achieved by pressurization at 1 MPa in the thickness direction (hereinafter sometimes simply referred to as "thickness after pressurization"), in order to exclude the influence of the surface roughness due to the carbon fibers themselves. The thickness of the carbon fiber nonwoven fabric after pressurization is determined by sandwiching a carbon fiber nonwoven fabric cut into 2.5 cm $\times$ 2.5 cm between metal plates having a surface area of 3 cm or more $\times$ 3 cm or more and a thickness of 1 cm or more, and applying a pressure of 1 MPa to the carbon fiber nonwoven fabric.

The presence of the corrugated plate-like irregularities can be determined, for example, by three-dimensionally displaying, by means of focus stacking, images taken with an optical microscope at different focal points from the surface of the carbon fiber nonwoven fabric having the irregularities, or by taking an image of the surface of the carbon fiber nonwoven fabric having the irregularities by laser scanning in a field of view of 500 $\mu$m to 5 mm with a laser microscope, performing tilt correction with shape analysis software, and displaying different heights in different colors.

In the following description, unless otherwise noted, the "cross section" means a cross section of the carbon fiber nonwoven fabric that is perpendicular to the extending direction of the linear grooves and ridges.

The corrugated plate-like irregularities may be provided on both surfaces of the carbon fiber nonwoven fabric. In the present invention, in the case where the carbon fiber nonwoven fabric is used as a gas diffusion electrode, the corrugated plate-like irregularities have only to exert the effect of facilitating the discharge of water drops generated at the surface of the gas diffusion electrode which is in contact with the separator. Therefore, the irregularities have only to be provided on one surface, and this is preferable also in view of production. Therefore, in the present description, a carbon fiber nonwoven fabric having irregularities only on one surface thereof is described, and in the description, a surface having irregularities thereon is referred to as a "surface having irregularities thereon" or "upper surface", and a surface reverse to this surface and not having irregularities thereon is referred to as a "surface not having irregularities thereon" or "lower surface". Furthermore, unless otherwise noted, the following description is based on the assumption that the carbon fiber nonwoven fabric is horizontally placed with the lower surface facing down. In the case where the irregularities are provided on both surfaces of the carbon fiber nonwoven fabric, a plane that passes through tips of ridges of irregularities provided on the surface reverse to the surface to be observed and having irregularities thereon is regarded as the lower surface.

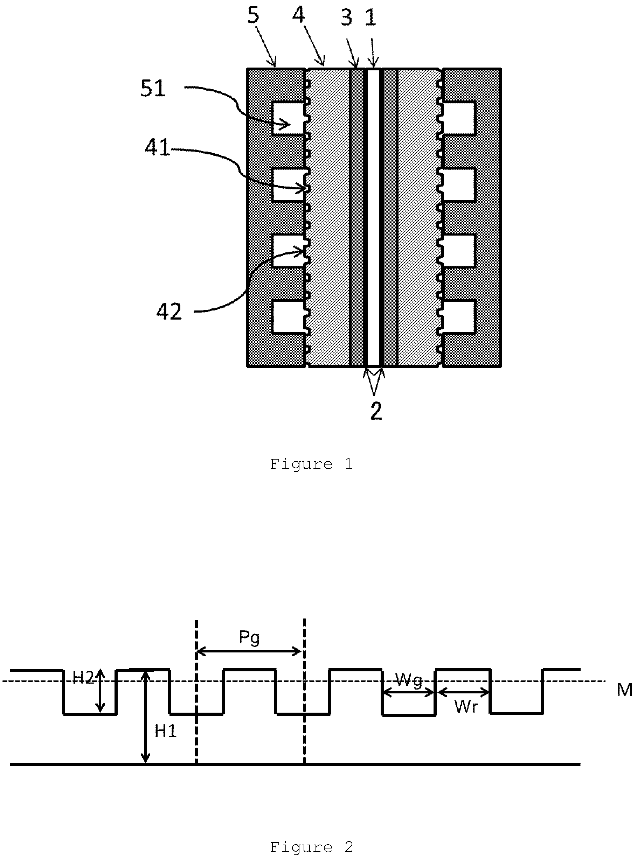

Fig. 2 is a schematic view showing a cross section of a carbon fiber nonwoven fabric according to one aspect that is used in the present invention. The carbon fiber nonwoven fabric shown in Fig. 2 has irregularities having a rectangular wave-shaped cross section. In Fig. 2, Pg is the arrangement pitch of grooves, Wg is the width of each groove, Wr is the width of each ridge, H1 is the thickness of the carbon fiber nonwoven fabric, and H2 is the height of irregularities (the distance from the bottom of the grooves to the tip of the ridges) . In the present description, with respect to a virtual plane M passing through a point at a height of one half of H2, the height of the corrugated plate-like irregularities, a portion present below the plane M is referred to as a groove, and a portion present above the plane M is referred to as a ridge. The width Wg of each ridge is the width of the cut surface of the ridge at the plane M in the cross section of the carbon fiber nonwoven fabric, and the width Wr of each groove is the width of the cut surface of the groove at the plane M therein.

The carbon fiber nonwoven fabric shown in Fig. 2 has a rectangular wave-shaped cross section, and the cross sections of the grooves and the ridges each have a rectangular shape. That is, the wall surfaces of the grooves and the ridges are formed substantially perpendicular to the lower surface. The wall surfaces of the grooves and the ridges may be inclined from the direction of the perpendicular to the lower surface. That is, the cross sections of the grooves and the ridges may each be trapezoidal or substantially semicircular (U-shaped).

The height (H2) of the irregularities is preferably 20 $\mu$m or more, more preferably 50 $\mu$m or more. The upper limit of the height (H2) of the irregularities is not particularly limited as long as the strength of the carbon fiber nonwoven fabric is maintained.

The arrangement pitch (Pg) of the grooves is preferably 20 $\mu$m to 2000 $\mu$m. When the arrangement pitch of the grooves is 20 $\mu$m or more, it is easy to obtain the effect of reducing the contact area between the surface of the carbon fiber nonwoven fabric and water drops. When the arrangement pitch of the grooves is 2000 $\mu$m or less, water drops do not fall into the grooves and easily move on the surface of the ridges. Herein, the arrangement pitch of the grooves is the average of distances between center lines of adjacent grooves. The arrangement pitch of the grooves can be calculated from the width of a part of the carbon fiber nonwoven fabric having the irregularities thereon in the direction orthogonal to the extending direction of the grooves, and the number of grooves. From the viewpoint of improving the mobility of water drops on the surface of the carbon fiber nonwoven fabric, the arrangement pitch of the grooves is more preferably 100 $\mu$m to 1000 $\mu$m. In addition, the arrangement pitch of the grooves is preferably smaller than the arrangement pitch of the channels of the separator described later, because the movement of the water drops is facilitated.

Further, the smaller the ratio of the area of the grooves to the area of the ridges (groove area ratio: Wg/Wr) is in the surface of the carbon fiber nonwoven fabric having the irregularities in plan view, the more easily the water drops move on the surface of the ridges without staying in the grooves and are discharged. Therefore, the groove area ratio is preferably 0.9 or less. Furthermore, reducing the groove area ratio increases the contact area between the separator and the substrate, and improves the electric conductivity and thermal conductivity. Therefore, the groove area ratio is more preferably 0.7 or less. In addition, in view of easily obtaining the effect of reducing the contact area between the surface of the carbon fiber nonwoven fabric and water drops, the groove area ratio is preferably at least 0.1.

In the present invention, a carbon fiber nonwoven fabric in which ridges and grooves have light permeability at an equal level is used. The fact that the grooves and the ridges have light permeability at an equal level is determined by the method described in the first paragraph of the examples described later.

The pressure (P) at the time of passing a liquid through the pores of the carbon fiber nonwoven fabric can be calculated from the following Young-Laplace equation: P = -(2g$_L$cosq)/r
wherein g$_L$ is the surface tension of the liquid, q is the contact angle between the liquid and the peripheral surface of the pores, and r is the pore size. The Young-Laplace equation shows that, of two pores different in pore size present adjacent to each other, the liquid preferentially passes through the pore having the larger pore size.

The case where the grooves and the ridges of the carbon fiber nonwoven fabric have light permeability at an equal level may be a case in which the basis weight of the grooves and the basis weight of the ridges are at an equal level, a case in which the basis weights are equalized by the difference in the fiber orientation, or a case in which the basis weights are equalized by the difference in the fineness. When the grooves and the ridges have light permeability at an equal level, the density of the grooves is relatively high and the density of the ridges is relatively low. That is, the average pore size of the grooves is smaller than the average pore size of the ridges. Herein, in light of the Young-Laplace equation, the water generated in the catalyst layer preferentially passes through the ridges rather than the grooves, and is finally discharged to the separator side preferentially from the ridges. Herein, as described later, since the gas diffusion electrode and the separator are arranged so that the grooves of the carbon fiber nonwoven fabric are substantially parallel to linear portions of the linear channels of the separator, the water discharged from the ridges easily moves on the surface of the ridges of the gas diffusion electrode in the extending direction of the ridges by the wind pressure of the fuel gas.

In order to further improve the water repellency of the gas diffusion electrode, it is preferable to further impart a water repellent to the carbon fiber nonwoven fabric. The water repellent is not particularly limited as long as it has an effect of increasing the water drop contact angle to the surface of the carbon fiber nonwoven fabric. Examples of the water repellent include fluororesins such as PTFE, FEP, and PVDF, and silicone resins such as PDMS.

It is preferable that the carbon fiber nonwoven fabric have, due to the imparted water repellent, a water drop contact angle to the surface of the carbon fiber nonwoven fabric having the irregularities of 100° or more. It is preferable that the water repellency be high from the viewpoint of improving the water discharge performance of the fuel cell.

Therefore, the water drop contact angle to the surface of the carbon fiber nonwoven fabric having the irregularities is preferably 120° or more, more preferably 140° or more.

It is also preferable to further provide a microporous layer containing a fluororesin and a carbon material such as carbon black on the lower surface of the carbon fiber nonwoven fabric having the irregularities as described above thereon (the lower surface is the surface facing an electrolyte membrane in a membrane electrode assembly) in order to improve the water discharge performance. The amount of the fluororesin contained in the microporous layer is preferably 1 to 80% by weight, more preferably 10 to 70% by weight, even more preferably 20 to 60% by weight based on the carbon material, from the viewpoint of achieving both the electric conductivity and strength.

As shown in Fig. 1, a single cell of a polymer electrolyte fuel cell has an electrolyte membrane 1, catalyst layers 2 disposed on opposite sides of the electrolyte membrane 1, an anode-side gas diffusion electrode 4 and a cathode-side gas diffusion electrode 4 sandwiching the catalyst layers 2, and a pair of separators 5 sandwiching the gas diffusion electrodes 4.

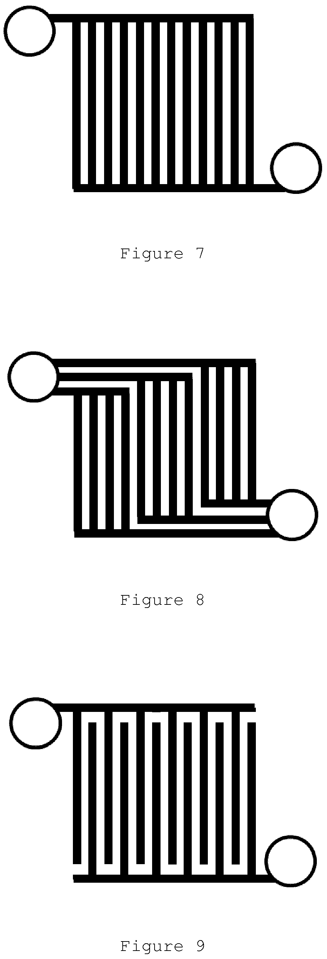

In the polymer electrolyte fuel cell of the present invention, the separators 5 have parallel linear channels 51 formed thereon. The parallel channels are channels having a branch channel for distributing a fuel gas that is branched from the central channel. The "parallel channel" means a channel shape other than the serial channel which is one continuous channel without having any branch. Further, the "linear channel" means a channel shape in which 80% or more of the entire length of the channel is formed as a linear portion which is almost continuous from one end to the other end of the separator. Examples of such parallel linear channels include parallel channels as shown in Fig. 7, multi-parallel channels as shown in Fig. 8, and interdigitated channels as shown in Fig. 9. In Figs. 7 to 9, the portions of the channels formed in the longitudinal direction in each drawing correspond to the linear portions. In order to obtain the effect of the present invention, it is particularly preferable to use a separator having parallel or multi-parallel channels.

In the present invention, the gas diffusion electrode and the separator are arranged so that the surface, having irregularities thereon, of the gas diffusion electrode 4 a substrate of which is a carbon fiber nonwoven fabric, faces the surface of the separator 5 having the channels thereon, and grooves 41 and ridges 42 of the carbon fiber nonwoven fabric are substantially parallel to a direction of linear portions 51 of the linear channels of the separator. When the gas diffusion electrode and the separator are arranged so that the grooves of the carbon fiber nonwoven fabric are substantially parallel to the linear portions of the channels of the separator, the direction of wind pressure of the fuel gas coincides with the extending direction of the grooves of the carbon fiber nonwoven fabric. Therefore, water drops gathered on the surface of the ridges are less likely to fall into the grooves or get caught in the grooves, and can easily move on the surface of the ridges. On the other hand, when the gas diffusion electrode and the separator are arranged so that the grooves of the carbon fiber nonwoven fabric are substantially perpendicular to the linear portions of the channels of the separator, the direction of wind pressure of the fuel gas does not coincide with the extending direction of the grooves. Therefore, water drops on the surface of the ridges fall into the grooves or get caught in the grooves, and hardly move. Herein, the phrase that "the grooves and the ridges of the carbon fiber nonwoven fabric are substantially parallel to the linear portions of the linear channels of the separator" means that the angle between the extending direction of the linear ridges or the linear grooves of the carbon fiber nonwoven fabric and the direction of the linear portions of the linear channels of the separator is 30° or less.

Herein, the angle between the direction of the ridges or the grooves and the direction of the linear portions of the linear channels of the separator is preferably 20° or less, more preferably 10° or less. In addition, the arrangement pitch of the channels of the separator is preferably larger than the arrangement pitch of the grooves of the carbon fiber nonwoven fabric, because the movement of the water drops is facilitated.

Further, when the extending direction of the grooves or the ridges of the carbon fiber nonwoven fabric intersects with the direction of the linear portions of the linear channels of the separator, the movement of the water drops gathered on the ridges is blocked by the part of the separator having no channels formed thereon. Therefore, it is preferable to arrange the gas diffusion electrode and the separator so that the extending direction of the grooves or the ridges of the carbon fiber nonwoven fabric does not intersect with the direction of the linear portions of the linear channels of the separator.

<Method for producing polymer electrolyte fuel cell>

The polymer electrolyte fuel cell of the present invention can be produced by the following production method, for example.

The carbon fiber nonwoven fabric used in the gas diffusion electrode substrate can be obtained by carbonizing a carbon fiber precursor nonwoven fabric. Carbon fiber precursors are fibers that turn into carbon fibers by firing. The carbon fiber precursors preferably have a carbonization rate of 15% or more, more preferably 30% or more. The carbon fiber precursors used in the present invention are not particularly limited. Examples of the carbon fiber precursors include infusible polyacrylonitrile (PAN)-based fibers (PAN-based flame resistant fibers), infusible pitch-based fibers, polyvinyl alcohol-based fibers, cellulose-based fibers, infusible lignin-based fibers, infusible polyacetylene-based fibers, infusible polyethylene-based fibers, and polybenzoxazole-based fibers. In particular, PAN-based flame resistant fibers, which are highly tenacious and stretchable, and are easy to process, are preferable. The carbonization rate can be determined according to the following equation.

$$\mathtt{Carbonization\ rate\ (\%)\ =\ weight\ after\ firing/weight}$$

$$\mathtt{before\ firing\ \times\ 100}$$

The carbon fiber precursor nonwoven fabric is a fabric formed by combining webs formed of carbon fiber precursors by entanglement, thermal bonding, bonding with a binder or the like. The web may be a dry-laid web such as a parallel-laid web or a cross-laid web, an air-laid web, a web made by wet forming, or a spunbonded web, a melt-blown web, or an electrospun web which is obtained by extrusion. In the case of infusibilizing PAN-based fibers obtained by a solution spinning method and making a web of the fibers, it is preferable to use a dry web or a wet web for obtaining a uniform sheet easily. In addition, a nonwoven fabric obtained by mechanically entangling dry webs is particularly preferable since it is easy to achieve shape stability in the process.

In addition, as described above, a carbide is preferably adhered to the intersections of carbon fibers in the carbon fiber nonwoven fabric, because the carbon fiber nonwoven fabric is excellent in electric conductivity and thermal conductivity. Such a carbon fiber nonwoven fabric can be produced by imparting a carbide precursor to the carbon fiber precursor nonwoven fabric in advance. The method of imparting the carbide precursor is not particularly limited. Examples of the method include a method of impregnating the carbon fiber precursor nonwoven fabric with a carbide precursor solution or spraying a carbide precursor solution to the carbon fiber precursor nonwoven fabric, and a method of mixing thermoplastic resin fibers serving as a carbide precursor in the carbon fiber precursor nonwoven fabric in advance.

In the case where the carbon fiber precursor nonwoven fabric is impregnated with a carbide precursor solution or a carbide precursor solution is sprayed to the carbon fiber precursor nonwoven fabric, a thermosetting resin such as a phenol resin, an epoxy resin, a melamine resin, or a furan resin may be used. In particular, a phenol resin is preferable because of its high carbonization yield. However, in the case where the carbon fiber precursor nonwoven fabric is impregnated with a thermosetting resin solution, a difference occurs in the shrinkage behavior between the carbon fiber precursors and the binder resin during the carbonization process. Accordingly, the carbon fiber nonwoven fabric is easily deteriorated in smoothness. In addition, a migration phenomenon, that is, a phenomenon that the solution moves to the surface of the carbon fiber nonwoven fabric at drying of the binder resin, is easily caused, so that uniform treatment tends to be difficult.

In contrast, a method of mixing thermoplastic resin fibers serving as a binder in the carbon fiber precursor nonwoven fabric in advance is most preferable because this method achieves a uniform ratio of the carbon fiber precursors to the binder resin in the nonwoven fabric, and also causes little difference in the shrinkage behavior between the carbon fiber precursors and the binder resin. Preferable thermoplastic resin fibers are polyester fibers, polyamide fibers, and polyacrylonitrile fibers, which are relatively inexpensive.

The amount of the binder to be blended is, for an improvement in strength, electric conductivity, and thermal conductivity of the carbon fiber nonwoven fabric, preferably 0.5 parts by mass or more, more preferably 1 part by mass or more based on 100 parts by mass of the carbon fiber precursors. In addition, for an improvement in water discharge performance, the amount of the binder is preferably 80 parts by mass or less, more preferably 50 parts by mass or less.

Then, the carbon fiber precursors are pressed. The heating temperature in this process is preferably 160°C to 280°C, more preferably 180°C to 260°C, in view of the shape stability of the presses on a nonwoven fabric structure formed from carbon fiber precursors.

The corrugated plate-like irregularities in which linear grooves and linear ridges are alternately arranged are formed by forming irregularities on the surface of the carbon fiber precursor nonwoven fabric, and then carbonizing the carbon fiber precursor nonwoven fabric. More specifically, it is preferable that the irregularities be formed by a method of pressing, against the surface of the carbon fiber precursor nonwoven fabric, a shaping member having irregularities corresponding to the irregularities to be formed, that is, by embossing. Examples of the embossing method include a method in which continuous pressing is performed with the use of an emboss roll having protrusions corresponding to the grooves and a flat roll, and a method in which batch pressing is performed with the use of a plate having such protrusions and a flat plate.

In such a carbon fiber nonwoven fabric having the grooves formed by the method of pressing a shaping member against the surface of the carbon fiber precursor nonwoven fabric, the grooves and the ridges have light permeability at an equal level. Therefore, as described above, it is possible to preferentially gather the water generated by the reaction on the surface of the ridges. The gathered water moves on the surface of the ridges by the wind pressure of the fuel gas, and is easily discharged to the outside of the system.

On the other hand, in the case of a high-pressure liquid injection method such as a method in which the carbon fiber nonwoven fabric is scraped with a laser, a needle or the like, or a water jet punching method, the light permeability of the grooves is lower than that of the ridges. In this case, water preferentially passes through the grooves rather than the ridges, and is finally gathered in the grooves. When water is gathered in the grooves, the water drops are less subjected to the wind pressure by the fuel gas as compared with the case where water is gathered on the ridges, and are hardly discharged, so that the flooding phenomenon is likely to occur.

Then, the carbon fiber precursor nonwoven fabric having irregularities thereon is carbonized. The method of carbonization is not particularly limited, and any method publicly known in the field of carbon fiber materials can be used. Firing in an inert gas atmosphere is preferably employed. The firing in an inert gas atmosphere is preferably carried out by heating the carbon fiber precursor nonwoven fabric to 800°C or higher while supplying an inert gas such as nitrogen or argon at atmospheric pressure. The temperature for the carbonization is preferably 1500°C or higher, more preferably 1900°C or higher for achieving excellent electric conductivity and thermal conductivity. Meanwhile, the temperature is preferably 3000°C or lower in consideration of the operation cost of the heating furnace. In the case where the carbon fiber nonwoven fabric is used as a gas diffusion electrode of a polymer electrolyte fuel cell, it is preferable to control the form of the carbon fiber precursor nonwoven fabric and the conditions for the carbonization so that the carbon fiber nonwoven fabric obtained after carbonization may have a thickness of 30 to 400 $\mu$m and a density of 0.2 to 0.8 g/cm$^3$.

[Water repellency treatment]

The water repellent can be imparted to the carbon fiber nonwoven fabric by a method such as melt impregnation, or printing, transfer, or impregnation using a solution or a dispersion of the water repellent. The water drop contact angle is the average of values determined by dropping ten 10-$\mu$L water drops onto the surface of the carbon fiber nonwoven fabric having the irregularities in an environment at a temperature of 20°C and a humidity of 60%. The water drop contact angle can be measured, for example, with an automatic contact angle meter DMs-601 (manufactured by Kyowa Interface Science Co., Ltd.).

[Microporous layer]

The microporous layer can be formed by applying a paste, which is obtained by adding a surfactant and water to a fluororesin such as PTFE and a carbon material such as carbon black, to a lower surface of a carbon fiber nonwoven fabric by bar coating or die coating, drying the paste, and sintering the paste.

[Polymer electrolyte fuel cell]

A membrane electrode assembly having gas diffusion electrodes substrate of which is a carbon fiber nonwoven fabric can be obtained by forming catalyst layers on opposite sides of a polymer electrolyte membrane and further arranging and bonding the carbon fiber nonwoven fabrics produced as described above so as to sandwich the catalyst layers, or arranging and bonding the carbon fiber nonwoven fabrics produced as described above each having a catalyst layer on opposite sides of a polymer electrolyte membrane. Further, a polymer electrolyte fuel cell can be obtained by arranging separators having parallel linear channels formed thereon on opposite sides of the membrane electrode assembly so that a surface of each carbon fiber nonwoven fabric having irregularities thereon faces a surface of each separator having the channels thereon, and the grooves and the ridges of each carbon fiber nonwoven fabric are substantially parallel to the direction of linear portions of the linear channels of each separator.

EXAMPLES

The data in examples and comparative examples were obtained in the following manner.

1. Equality of light permeability between grooves and ridges

A carbon fiber nonwoven fabric is placed on a stage of an optical microscope so that the lower surface of the fabric comes into contact with the stage. The carbon fiber nonwoven fabric is irradiated from the surface thereof having irregularities thereon, and a photograph is taken in a rectangular observation field including 4 to 10 grooves and 4 to 10 ridges so that the grooves and the ridges are parallel to the long side of the rectangle (upright observation image) . Then, the carbon fiber nonwoven fabric is irradiated from the lower surface side perpendicularly to the lower surface, and the same range of the field of view is photographed from the surface of the carbon fiber nonwoven fabric having irregularities (inverted observation image).

In the inverted observation image, when the light permeability is different between the grooves and the ridges, a contrast in which the grooves are bright and the ridges are dark is observed because the light transmittance differs between the grooves and the ridges.

Then, the average value of brightness of the inverted observation image is calculated using image processing software, and the average value is taken as the average brightness. The brightness herein is a numerical value expressed in 256 stages from 0 to 255 in the RGB color model.

In addition, as for each groove present in the inverted observation image, the brightness of a range defined by trimming the groove in the width direction of the groove by a length of half the width of the groove around the center line of the groove is measured. The average of the measured values is taken as the brightness of the grooves.

Similarly, as for each ridge, the brightness of a range defined by trimming the ridge by a length of half the width of the ridge around the center line of the ridge is measured. The average of the measured values is taken as the brightness of the ridges.

The carbon fiber nonwoven fabric is observed as described above, and the average brightness of the observation field is compared with the brightnesses of each groove and each ridge included in the observation field. The comparison is made on 100 grooves and 100 ridges, and if there are 65 or more grooves having a higher brightness than the average brightness and 65 or more ridges having a lower brightness than the average brightness, it is determined that the light permeability is not at an equal level between the ridges and the grooves. Likewise, if there are 65 or more grooves having a lower brightness than the average brightness and 65 or more ridges having a higher brightness than the average brightness, it is determined that the light permeability is not at an equal level between the ridges and the grooves. Then, if the result does not conform to either of the above, it is determined that the light permeability is at an equal level between the grooves and the ridges.

2. Power generation performance

The polymer electrolyte fuel cell produced in each of the examples and comparative examples was used. The cell temperature was 60°C, the dew point of the hydrogen electrode and the air electrode was 67.5°C, and the back pressure of each electrode was 100 kPa. As a routine test, the voltage value at a hydrogen gas flow rate of 0.05 L/min, an oxygen gas flow rate of 0.2 L/min, and a current density of 0.2 mA/cm$^2$ was measured.

[Example 1]

A crimped yarn of a PAN-based flame resistant yarn was cut to have a number average fiber length of 76 mm, and then a sheet obtained by carding and cross-laying the yarn was subjected to needle punching at a needle density of 300 needles/cm$^2$ to produce a carbon fiber precursor nonwoven fabric. A metal plate having linear groove shapes in one surface (groove width: 420 $\mu$m, ridge width: 420 $\mu$m, arrangement pitch of grooves: 840 $\mu$m, depth of indentations: 90 $\mu$m, rectangular wave-shaped irregularities) was mounted on the PAN-based flame resistant nonwoven fabric, and the nonwoven fabric was pressed under conditions of 220°C and 1 MPa for 4 minutes to give a carbon fiber precursor nonwoven fabric having, in a surface on which the grooved surface of the metal plate was mounted, grooves reflecting the grooves of the metal plate. Then, the carbon fiber precursor nonwoven fabric was fired in an inert atmosphere at 2400°C for 4 hours to give a carbon fiber nonwoven fabric having linear grooves in one surface. The width, arrangement pitch, and area ratio of the grooves are as shown in Table 1.

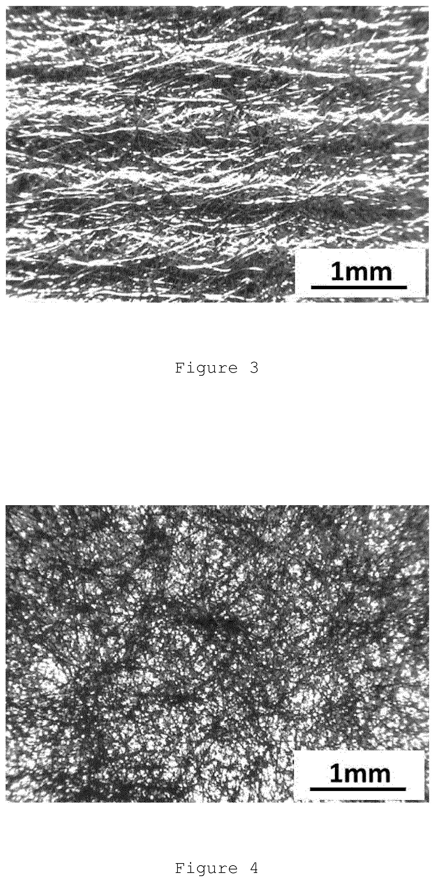

When the obtained carbon fiber nonwoven fabric was observed by the upright method in accordance with the above 1., grooves were observed in the surface of the substrate, and the light permeability was at an equal level between the grooves and the ridges. The upright observation image and the inverted observation image of the carbon fiber nonwoven fabric produced in Example 1 are shown in Figs. 3 and 4, respectively. In the upright observation image in Fig. 3, linear grooves extend in the same direction with respect to the long axis direction within the observation field, and five grooves are present at a pitch of about 800 $\mu$m in the short axis direction within the observation field. In the inverted observation image in Fig. 4, no grooves are visually recognized.

To the carbon fiber nonwoven fabric produced as described above, an aqueous dispersion of PTFE adjusted to have a solid content concentration of 3% by weight was imparted by impregnation so that the PTFE solid content deposition amount was 5% by weight, and the fabric was dried at 130°C using a hot air drier, and heated at 380°C for 10 minutes. In this manner, a water repellent was imparted to the carbon fiber nonwoven fabric as water repellency treatment. The water drop contact angle to the grooved surface was 140°, and it was confirmed that a sufficient amount of water repellent was imparted to the carbon fiber nonwoven fabric.

Then, a microporous layer was imparted to the surface of the carbon fiber nonwoven fabric not having irregularities, which has been subjected to the water repellency treatment. First, a coating liquid was prepared from a mixture of acetylene black ("DENKA BLACK" (registered trademark) manufactured by Denki Kagaku Kogyo Co., Ltd.), a PTFE resin ("POLYFLON" (registered trademark) D-1E manufactured by DAIKIN INDUSTRIES, LTD.), a surfactant ("TRITON" (registered trademark) X-100 manufactured by NACALAI TESQUE, INC.), and pure water at a ratio of 7.7 parts by mass/2.5 parts by mass/14 parts by mass/75.6 parts by mass. Then, the coating liquid was applied with a die coater to the lower surface of the carbon fiber nonwoven fabric, heated and dried at 120°C for 10 minutes, and sintered at 380°C for 10 minutes.

Then, to opposite surfaces of a fluorine-based electrolyte membrane formed of Nafion (registered trademark) (manufactured by DuPont), catalyst layers formed of platinum on carbon and Nafion (platinum amount: 0.2 mg/cm$^2$) were bonded by hot pressing to produce a catalyst-coated membrane (CCM). Two gas diffusion electrodes produced as described above were placed on opposite surfaces of the CCM, and the resultant laminate was hot-pressed again to give a membrane electrode assembly (MEA). At this time, the gas diffusion electrode substrate was disposed so that the surface thereof having the microporous layer thereon came into contact with the catalyst layer.

The MEA and a separator having parallel linear channels (1000 $\mu$m in width, 2000 $\mu$m in pitch, and 500 $\mu$m in depth) shown in Fig. 7 were arranged so that the angle between the extending direction of the grooves and the ridges of the gas diffusion electrode and the direction of linear portions of the linear channels of the separator would be 10° or less to produce a polymer electrolyte fuel cell (single cell) having a power generation area of 5 cm$^2$.

[Example 2]

A polymer electrolyte fuel cell (single cell) was produced in the same manner as in Example 1 except that the metal plate used for imparting the shape of linear grooves to one surface of a carbon fiber precursor nonwoven fabric was changed to a metal plate having a groove width of 420 $\mu$m, a ridge width of 210 $\mu$m, an arrangement pitch of grooves of 630 $\mu$m, and a depth of indentations of 90 $\mu$m.

[Example 3]

A polymer electrolyte fuel cell (single cell) was produced in the same manner as in Example 1 except that the metal plate used for imparting the shape of linear grooves to one surface of a carbon fiber precursor nonwoven fabric was changed to a metal plate having a groove width of 210 $\mu$m, a ridge width of 420 $\mu$m, an arrangement pitch of grooves of 630 $\mu$m, and a depth of indentations of 90 $\mu$m.

[Example 4]

A polymer electrolyte fuel cell was produced in the same manner as in Example 1 except that no microporous layer was formed on the carbon fiber nonwoven fabric.

[Example 5]

A polymer electrolyte fuel cell was produced in the same manner as in Example 1 except that the MEA and the separator were arranged so that the angle between the extending direction of the grooves and the ridges of the gas diffusion electrode and the direction of linear portions of the linear channels of the separator would be 10° or more and 20° or less.

[Example 6]

A polymer electrolyte fuel cell was produced in the same manner as in Example 1 except that the MEA and the separator were arranged so that the angle between the extending direction of the grooves and the ridges of the gas diffusion electrode and the direction of linear portions of the linear channels of the separator would be 20° or more and 30° or less.

[Comparative Example 1]

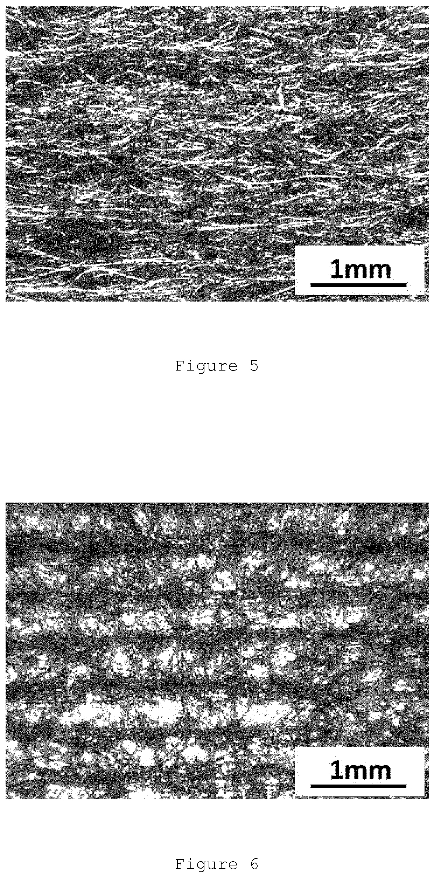

A PAN-based precursor fiber staple having three-dimensional entangling was subjected to carding, and a web was produced. A predetermined number of webs were laminated, and then high pressure water streams from nozzles were continuously passed through the laminate in the thickness direction thereof to entangle the fibers, whereby a nonwoven fabric was produced. In this continuous processing, the size of the nozzle holes and the position and interval of the water streams were adjusted to produce a carbon fiber precursor nonwoven fabric having linear grooves (groove width: 500 $\mu$m, ridge width: 150 $\mu$m, arrangement pitch of grooves: 650 $\mu$m, depth of indentations: 50 $\mu$m) in one surface. Then, the carbon fiber precursor nonwoven fabric was fired in an inert atmosphere at 2400°C for 4 hours to give a carbon fiber nonwoven fabric having linear grooves in one surface. The upright observation image and the inverted observation image of the carbon fiber nonwoven fabric produced in Comparative Example 1 are shown in Figs. 5 and 6, respectively. In the inverted observation image in Fig. 6, linear grooves extending in the same direction with respect to the long axis direction within the observation field can be visually recognized, and it is understood that six grooves are present at a pitch of about 650 μm in the short axis direction within the observation field.

Using this carbon fiber nonwoven fabric as a gas diffusion electrode substrate, a polymer electrolyte fuel cell was produced in the same manner as in Example 1.

[Comparative Example 2]

A polymer electrolyte fuel cell was produced in the same manner as in Comparative Example 1 except that the MEA and the separator were arranged so that the angle between the extending direction of the grooves of the carbon fiber nonwoven fabric and the direction of linear portions of the linear channels of the separator would be 80° or more.

[Comparative Example 3]

A polymer electrolyte fuel cell was produced in the same manner as in Example 1 except that the MEA and the separator were arranged so that the angle between the extending direction of the grooves of the carbon fiber nonwoven fabric and the direction of linear portions of the linear channels of the separator would be 80° or more.

[Comparative Example 4]

A polymer electrolyte fuel cell was produced in the same manner as in Example 2 except that the MEA and the separator were arranged so that the angle between the extending direction of the grooves of the carbon fiber nonwoven fabric and the direction of linear portions of the linear channels of the separator would be 80° or more.

[Comparative Example 5]

A polymer electrolyte fuel cell was produced in the same manner as in Example 3 except that the MEA and the separator were arranged so that the angle between the extending direction of the grooves of the carbon fiber nonwoven fabric and the direction of linear portions of the linear channels of the separator would be 80° or more.

[Comparative Example 6]

A polymer electrolyte fuel cell was produced in the same manner as in Example 1 except that the MEA and a parallel separator were arranged so that the angle between the extending direction of the grooves of the carbon fiber nonwoven fabric and the direction of linear portions of the linear channels of the separator would be 50° or more.

[Comparative Example 7]

A polymer electrolyte fuel cell was produced in the same manner as in Example 1 except that the MEA and a parallel separator were arranged so that the angle between the extending direction of the grooves of the carbon fiber nonwoven fabric and the direction of linear portions of the linear channels of the separator would be 70° or more.

Table 1 shows the form of each carbon fiber nonwoven fabric produced in each of the examples and comparative examples, and the results of power generation performance evaluation of each polymer electrolyte fuel cell including the carbon fiber nonwoven fabric as a gas diffusion electrode substrate.

[Table 1]

| | Example 1 | Example 2 | Example 3 | Example 4 | Example 5 | Example 6 |
|---|---|---|---|---|---|---|
| Light permeability of grooves and ridges | Equal level | Equal level | Equal level | Equal level | Equal level | Equal level |
| Groove width of substrate | 420 μm | 210 μm | 420 μm | 420 μm | 420 μm | 420 μm |
| Ridge width of substrate | 420 μm | 420 μm | 210 μm | 420 μm | 420 μm | 420 μm |
| Arrangement pitch of grooves of substrate | 840 μm | 630 μm | 630 μm | 840 μm | 840 μm | 840 μm |
| Groove area ratio | 1.0 | 0.5 | 2.0 | 1.0 | 1.0 | 1.0 |
| Microporous layer | Yes | Yes | Yes | No | Yes | Yes |
| Angle between extending direction of linear ridges or linear grooves of carbon fiber nonwoven fabric and direction of linear portions of linear channels of separator | 3° (Substantially parallel) | 2° (Substantially parallel) | 2° (Substantially parallel) | 3° (Substantially parallel) | 15° (Substantially parallel) | 24° (Substantially parallel) |
| Power generation performance | 0.65 V | 0.69 V | 0.55 | 0.41 | 0.55 V | 0.4 V |

[Table 2]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Light permeability of grooves and ridges | Not at equal level | Not at equal level | Equal level | Equal level | Equal level | Equal level | Equal level |
| Groove width of substrate | 500 μm | 500 μm | 420 μm | 210 μm | 420 μm | 420 μm | 420 μm |
| Ridge width of substrate | 150 μm | 150 μm | 420 μm | 420 μm | 210 μm | 420 μm | 420 μm |
| Arrangement pitch of grooves of substrate | 650 μm | 650 μm | 840 μm | 630 μm | 630 μm | 840 μm | 840 μm |
| Groove area ratio | 3.3 | 3.3 | 1.0 | 0.5 | 2.0 | 1.0 | 1.0 |
| Microporous layer | Yes | Yes | Yes | Yes | Yes | Yes | Yes |
| Angle between extending direction of linear ridges or linear grooves of carbon fiber nonwoven fabric and direction of linear portions of linear channels of separator | 3° (Substantially parallel) | 88° (Not substantially parallel) | 87° (Not substantially parallel) | 88° (Not substantially parallel) | 88° (Not substantially parallel) | 50° (Not substantially parallel) | 70° (Not substantially parallel) |
| Power generation performance | Below measurement limit (0.05 V or less) | Below measurement limit (0.05 V or less) | Below measurement limit (0.05 V or less) | Below measurement limit (0.06 V or less) | Below measurement limit (0.07 V or less) | Below measurement limit (0.05 V or less) | Below measurement limit (0.05 V or less) |

DESCRIPTION OF REFERENCE SIGNS

1:      Electrolyte membrane
2:      Catalyst layer
3:      Microporous layer
4:      Gas diffusion electrode
41:     Groove
42:     Ridge
5:      Parallel separator
51:     Linear channel (linear portion)

**Claims**

1.  A polymer electrolyte fuel cell, comprising a gas diffusion electrode a substrate of which is a carbon fiber nonwoven fabric, and a separator having parallel linear channels formed thereon,
    wherein the carbon fiber nonwoven fabric has corrugated plate-like irregularities in which linear ridges and linear grooves are alternately repeated, and the ridges and the grooves have light permeability at an equal level, and the gas diffusion electrode and the separator are arranged so that a surface of the carbon fiber nonwoven fabric having the irregularities thereon faces a surface of the separator having the channels thereon, and the grooves and the ridges are substantially parallel to a direction of linear portions of the linear channels of the separator.

2.  The polymer electrolyte fuel cell according to claim 1, wherein an arrangement pitch of the channels of the separator is larger than an arrangement pitch of the grooves of the carbon fiber nonwoven fabric.

3.  The polymer electrolyte fuel cell according to claim 1 or 2, wherein an area ratio of the grooves of the carbon fiber nonwoven fabric is 0.1 to 0.9.

4.  The polymer electrolyte fuel cell according to any one of claims 1 to 3, wherein an arrangement pitch of the grooves of the carbon fiber nonwoven fabric is 20 $\mu$m to 2000 $\mu$m.

5.  The polymer electrolyte fuel cell according to any one of claims 1 to 4, wherein the carbon fiber nonwoven fabric has a water repellent imparted thereto.

6.  The polymer electrolyte fuel cell according to any one of claims 1 to 5, wherein the surface of the carbon fiber nonwoven fabric having the irregularities has a water drop contact angle of 100° or more.

7.  The polymer electrolyte fuel cell according to any one of claims 1 to 6, wherein the linear channels of the separator have a shape of parallel channels, multi-parallel channels, or interdigitated channels.

8.  The polymer electrolyte fuel cell according to any one of claims 1 to 7, wherein the gas diffusion electrode and the separator are arranged so that an extending direction of the grooves or the ridges of the carbon fiber nonwoven fabric does not intersect with the direction of the linear portions of the linear channels of the separator.

Figure 1

Figure 2

Figure 3

Figure 4

Figure 5

Figure 6

Figure 7

Figure 8

Figure 9

## INTERNATIONAL SEARCH REPORT

| International application No. |
|---|
| PCT/JP2016/069776 |

| A. CLASSIFICATION OF SUBJECT MATTER |
|---|
| *H01M8/02*(2016.01)i, *H01M4/96*(2006.01)i, *H01M8/10*(2016.01)i |

According to International Patent Classification (IPC) or to both national classification and IPC

| B. FIELDS SEARCHED |
|---|

Minimum documentation searched (classification system followed by classification symbols)
H01M8/02, H01M4/96, H01M8/10

Documentation searched other than minimum documentation to the extent that such documents are included in the fields searched
| Jitsuyo Shinan Koho | 1922–1996 | Jitsuyo Shinan Toroku Koho | 1996–2016 |
|---|---|---|---|
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2007-73277 A (Toyota Motor Corp.), 22 March 2007 (22.03.2007), claims; paragraphs [0012] to [0031]; fig. 1 to 6 (Family: none) | 1-8 |
| Y | WO 2015/098530 A1 (Toray Industries, Inc.), 02 July 2015 (02.07.2015), claims; paragraphs [0011], [0060], [0070] to [0073], [0080] & JP 2015-159058 A & JP 2015-143405 A & JP 2015-143404 A & CA 2927098 A claims; paragraphs [0011], [0060], [0070] to [0073], [0080] & TW 201541696 A | 1-8 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 September 2016 (12.09.16) | 20 September 2016 (20.09.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
| --- |
| PCT/JP2016/069776 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-151585 A  (Toyota Motor Corp.), 23 May 2003 (23.05.2003), paragraph [0065]; fig. 5 (Family: none) | 2 |
| Y | JP 2003-17076 A  (Toho Tenax Co., Ltd.), 17 January 2003 (17.01.2003), claims; paragraphs [0037], [0040], [0058], [0066], [0092], [0093], [0097] (Family: none) | 1-8 |
| P,X | WO 2016/093041 A1  (Toray Industries, Inc.), 16 June 2016 (16.06.2016), claims; paragraphs [0027], [0039], [0062] to [0071] (Family: none) | 1-8 |
| A | JP 2007-299656 A  (Equos Research Co., Ltd.), 15 November 2007 (15.11.2007), (Family: none) | 1 |
| A | JP 2007-299657 A  (Equos Research Co., Ltd.), 15 November 2007 (15.11.2007), (Family: none) | 1 |
| A | JP 2007-323975 A  (Nissan Motor Co., Ltd.), 13 December 2007 (13.12.2007), (Family: none) | 1 |
| A | JP 2010-73563 A  (Nissan Motor Co., Ltd.), 02 April 2010 (02.04.2010), (Family: none) | 1 |
| A | JP 2009-245869 A  (Aisin Seiki Co., Ltd.), 22 October 2009 (22.10.2009), (Family: none) | 1 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11511289 W
- JP 2013020843 A
- JP 2003017076 A
- JP 2006139921 A